# EUROPÄISCHE PATENTSCHRIFT

(11) **EP 3 947 988 B1**
(45) Veröffentlichungstag und Bekanntmachung des Hinweises auf die Patenterteilung: **17.09.2025**
(21) Anmeldenummer: 20713566.6
(22) Anmeldetag: 20.03.2020
(51) Int. Cl.: F16B 19/08, B21J 15/02

(54) **STANZNIETVERBINDUNG**
SELF-PIERCING RIVET JOINT
LIAISON PAR RIVET AUTO-POINÇONNEUR

(30) Priorität: 04.04.2019 DE 102019204826
(43) Veröffentlichungstag der Anmeldung: 09.02.2022
(73) Patentinhaber: Audi AG, 85057 Ingolstadt (DE)
(72) Erfinder: HORNBOSTEL, Norbert, 74388 Talheim (DE); HELLMEIER, Heiko, 74081 Heilbronn (DE); BARKHAUSEN, Frank Björn, 74074 Heilbronn (DE)
(86) Internationale Anmeldenummer: PCT/EP2020/057729
(87) Internationale Veröffentlichungsnummer: WO 2020/200832

(56) Entgegenhaltungen:
- EP-A1- 0 833 063
- EP-A1- 3 633 215
- DE-A1- 102013 020 504
- DE-A1- 102013 020 504
- DE-A1- 19 700 627
- US-B1- 6 325 584
- BUDDE L ET AL: "WEITERENTWICKLUNG DER STANZNIETTECHNIK", BLECH ROHRE PROFILE, MEISENBACH, BAMBERG, DE, vol. 39, no. 4, 1 January 1992 (1992-01-01), pages 310 - 314, XP002053578, ISSN: 0006-4688

## Beschreibung

Die Erfindung betrifft eine Stanznietverbindung nach dem Oberbegriff des Anspruches 1. Die Erfindung ist beschränkt auf das Fügen von Bauteilen aus umformfähigen, metallischen Werkstoffen mit einer geringen Festigkeit bis 300 MPa, insbesondere auf das Fügen von Aluminiumwerkstoffen.

Die erfindungsgemäße Stanznietverbindung wird bevorzugt im Automobilbau angewendet. In diesem Fall ist die Stanznietverbindung speziell im Hinblick auf die bei Fahrzeugen auftretenden dynamischen Lasten und/oder Crashlasten ausgelegt. Im Automobilbau erfolgt die Herstellung einer Fahrzeugkarosserie in einer vollautomatischen Prozesskette, bei der beispielhaft Aluminiumhalbzeuge (Blech- und Gusswerkstoffe sowie Profile) bereitgestellt werden, mittels einer Stanznietverbindung zusammengefügt werden und daraufhin in zum Beispiel einem KTL-Prozess lackiert werden.

In einer gattungsgemäßen Stanznietverbindung sind zumindest zwei Bauteile aus umformfähigen metallischen Werkstoffen einer Festigkeit einer 300 MPa in einem Nietvorgang miteinander verbunden. Bei dem Nietvorgang durchstößt ein Stanzniet mit einer Setzkraft das erste, stempelseitige Bauteil und wird in das zweite, matrizenseitige Bauteil eingetrieben. Dies erfolgt unter Aufrechterhaltung einer Restbodendicke im zweiten, matrizenseitigen Bauteil sowie unter Aufspreizung des Stanzniets bis auf einen Aufspreizdurchmesser im zweiten Bauteil, um einen Hinterschnitt zu erzeugen. Der Stanzniet kann aus einem Drahtwerkstoff, etwa einem Kaltstauchstahl, hergestellt sein sowie mit einer Korrosionsschicht oberflächenveredelt sein.

Ein solcher herkömmlicher Stanzniet weist eine Innenbohrung mit einer vergleichsweise großen Bohrungstiefe auf. Der Stanzniet kann beispielhaft in insgesamt fünf Stufen gefertigt werden, von denen zwei Stufen für die Herstellung der Innenbohrung erforderlich sind. Zudem besteht bei dem herkömmlichen Stanzniet (aufgrund seiner schöpfenden Geometrie bedingt durch die tiefe Innenbohrung) im Tauch-Schleuder-Verfahren oder in anderen Beschichtungsverfahren die Problematik, dass das Beschichtungsmaterial in die Stanzniet-Innenbohrung fließt und die Innenbohrung verschließt. Aus der DE 10 2013 020 504 A1 ist ein Stanzniet zum Verbinden von hochfesten Stählen bekannt, die eine bogenförmige Innenwölbung an einem Schaftende des Stanzniets aufweist. Aus der EP 0 833 063 A ist ein Stanzniet zum Fügen zweier Aluminiumbleche bekannt. Aus der DE 20 2016 102 528 U1 ist ein Stanzniet zum Verbinden zweier Werkstücke, insbesondere aus hochfesten Stählen bekannt.

### BUDDE L ET AL: "WEITERENTWICKLUNG DER STANZNIETTECHNIK",BLECH ROHRE

PROFILE, MEISENBACH, BAMBERG, DE, Bd. 39, Nr. 4, 1. Januar 1992 (1992-01-01), Seiten 310-314,ISSN: 0006-4688 zeigt Ergebnisse einzelner Untersuchungen zum Stanznieten von Aluminiumwerkstoffen.

Die Aufgabe der Erfindung besteht darin, eine Stanznietverbindung bereitzustellen, der im Vergleich zum Stand der Technik einfach herstellbar ist und für eine größere Anzahl von Materialdicken-Kombinationen der zu fügenden Bauteile einsetzbar ist.

Die Aufgabe ist durch die Merkmale des Anspruches 1 gelöst. Bevorzugte Weiterbildungen der Erfindung sind in den Unteransprüchen offenbart.

Gemäß dem kennzeichnenden Teil des Anspruches 1 ist der Stanzniet so ausgelegt, dass eine Innenwölbung im unverformten Zustand ausgehend von der Schaftspitze mit einer Wölbungstiefe in Axialrichtung in den Nietschaft einragt, und dass die Wölbungstiefe zwischen 10% und 25% der Stanzniet-Gesamtlänge beträgt.

In einer technischen Umsetzung kann der noch unverformte Stanzniet einen zylindrischen Nietschaft mit der zur Schaftspitze offenen, flachen Innenwölbung sowie einen mit Bezug auf den Nietschaftdurchmesser durchmessergrößeren Nietkopf aufweisen. Die Innenwölbung ist im Vergleich zu einem herkömmlichen Stanzniet - fertigungstechnisch einfach - nur mit geringer Wölbungstiefe in die Schaftspitze eingearbeitet. Aufgrund der geringen Wölbungstiefe liegt - im Unterschied zu Stand der Technik - keine schöpfende Stanzniet-Geometrie vor. Von daher ergeben sich keine Probleme im Tauch-Schleuder-Verfahren oder in anderen Beschichtungsverfahren. Die Innenwölbung kann kalottenförmig, kegel- oder kegelstumpfförmig ausgebildet sein.

Bevorzugt kann das Grundmaterial des Stanzniets eine im Vergleich zu konventionellen Stanznieten wesentlich geringere Härte (bzw. Festigkeit), jedoch eine erheblich größere Duktilität aufweisen. Die Härte des Stanzniets im Ausgangszustand ohne Kaltverfestigung kann bevorzugt bei zwischen 200 HV1 und 320 HV1, insbesondere zwischen 250 HV1 und 300 HV1, liegen. Dies entspricht in etwa einer Festigkeit zwischen 600 MPa und 1000 MPa, insbesondere zwischen 750 MPa und 900 MPa.

Der Kern der Erfindung betrifft den Sachverhalt, dass die vergleichsweise geringe Festigkeit des Stanzniets in Kombination mit der später beschriebenen Stanzniet-Geometrie ein spezielles Stanzniet-Stauchverhalten während des Setzprozesses ergibt. Mit einer Niet- und einer Matrizengeometrie können besonders matrizenseitig sehr unterschiedliche Materialdicken gefügt werden. Denn bezüglich der Materialstärke des stempelseitigen Partners sind wir aufgrund der geringen Härte und der geringen Innenbohrungstiefe eher eingeschränkt gegenüber dem bekannten Stanznietelementen. Bevorzugt kann das Materialstärkenverhältnis zwischen dem stempelseitigen Bauteil und dem matrizenseitigen Bauteil beliebig zwischen 1:1 und 1:3 liegen.

Ausgangspunkt der Erfindung ist also ein im Vergleich zu einem herkömmlichen Halbhohlstanzniet wesentlich einfacher herzustellender Stanzniet, der anstelle einer tiefen Innenbohrung lediglich eine flache Innenwölbung an der Schaftspitze aufweist. Der Stanzniet mit der flachen Innenwölbung an seiner Schaftspitze ist im Hinblick auf das oben beschriebene ausgeprägte Stauchvermögen weiterentwickelt. Für dieses Stauchvermögen sind insbesondere das Stanzniet-Material, die Stanzniet-Kopfform (für die Setzkraft-Einleitung) und die Stanzniet-Fußgeometrie (für die Setzkraft-Ausleitung) von Relevanz: Die Kopfform kann ein Senkkopf mit einer planen Nietkopf-Oberseite sein. Die Nietkopf-Oberseite kann radial außen an einer Kopf-Oberkante in einen umlaufenden Kopfrand übergehen, der sich in Axialrichtung über eine Kopfseitenhöhe bis zu einer Kopf-Unterkante erstreckt. An die Kopf-Unterkante schließt sich die Nietkopf-Unterseite an, die in Richtung auf die Schaftspitze in den durchmesserreduzierten Nietschaft übergeht. Die Schaftspitze weist eine, die Innenwölbung begrenzende, ringförmig umlaufende Aufsetzkante auf, an der die Wandung der Innenwölbung mit dem Nietschaft-Außenumfang zusammenläuft. Das erfindungsgemäße Stauchvermögen kann bevorzugt durch ein im Vergleich zum Stand der Technik weiches Stanzniet-Material unterstützt werden. Besonders bevorzugte Maßangaben, die für das Stauchvermögen ebenfalls von Bedeutung sind, werden in den nachfolgend im einzelnen aufgelisteten Erfindungsaspekten dargelegt.

So ragt die Innenwölbung ausgehend von der Schaftspitze im unverformten Nietzustand mit einer Wölbungstiefe in Axialrichtung in den Nietschaft ein**.** Die Wölbungstiefe beträgt zwischen 10% und 25%, insbesondere 15%, der Stanzniet-Gesamtlänge. Auf diese Weise ergibt sich eine Nietkopf-Materialstärke (gemeint ist die Materialstärke des Stanzniets entlang der Stanzniet-Längsachse) zwischen 75% und 90%, insbesondere 85%, der Stanzniet-Gesamtlänge. Die Nietkopf-Materialstärke wird entlang der Niet-Längsachse zwischen einer Nietkopf-Oberseite und der kalottenförmigen Innenwölbung gemessen. Der obige Nietkopf kann somit eine ausreichend große Menge an Material für den Materialfluss während des Nietvorgangs bereitstellen.

Im Hinblick auf eine ausreichend große Verbindungsfestigkeit der Stanznietverbindung ist es von Vorteil, wenn nach erfolgten Setzprozess (das heißt Nietvorgang) die Stanzniet-Innenwölbung aufgrund von Materialfluss im Wesentlichen vollständig durch das Stanzniet-Material aufgefüllt ist. Bevorzugt weist daher die Schaftspitze nach dem Nietvorgang eine im Wesentlichen ebene Stirnfläche auf.

Während des Setzprozesses ist die Materialspannung insbesondere am Übergang zwischen dem Nietschaft und dem Nietkopf am größten. Um Materialrisse am Nietkopf-Nietschaft-Übergang zu vermeiden, kann dieser bevorzugt wie folgt realisiert sein: Der Übergang kann eine gerundet ausgebildete Nietkopf-Unterseite mit gleichbleibendem Kopfradius aufweisen. Die gerundet ausgebildete Nietkopf-Unterseite kann tangential nach radial außen in eine ebenflächige, konusförmige Nietkopf-Unterseite übergehen, die sich bis zu einem Nietkopf-Rand erstreckt. Die ebenflächige, konusförmige Nietkopf-Unterseite kann mit Bezug auf eine Querebene um einen Konuswinkel schräg nach oben in Richtung Nietkopf-Oberseite angestellt sein. Bevorzugt ist es, wenn der obige Kopfradius zwischen 0,8 mm und 2,0 mm liegt. Der Konuswinkel kann in einer Größenordnung von 20° liegen. Zwischen der Nietkopf-Unterseite und der Nietkopf-Oberseite kann sich ein radial äußerer Nietkopf-Rand über eine Kopfseitenhöhe erstrecken, die insbesondere bei zirka 0,3 mm liegen kann.

Zur weiteren Unterstützung eines einwandfreien Stauchverhaltens ist es bevorzugt, wenn der Stanzniet nicht als ein Rundkopfniet mit einem pilzförmigen Nietkopf, sondern als ein Senkkopfniet (oder Flachkopfniet) mit einer ebenflächigen Nietkopf-Oberseite realisiert ist. In der Stanznietverbindung kann die Nietkopf-Oberseite des Flachkopfniets flächenbündig, das heißt ohne Kopf-Überstand, mit der Oberfläche des ersten, stempelseitigen Bauteils ausgerichtet sein, und zwar nicht erhaben gegenüber der ganzheitlichen Bauteil-Oberfläche.

Die am Nietfuß, das heißt an der Schaftspitze, ausgebildete Schneidengeometrie kann eine ringförmige, umlaufende, die Innenwölbung begrenzende Aufsetzkante aufweisen. Die Aufsetzkante drückt beim Setzprozess als Schneide, mit der einerseits ein frühzeitiges Stauchen der Stanzniet unterbunden wird, und andererseits ein Ausspreizen des Stanzniets um ein vordefiniertes Spreizmaß radial nach außen gesteuert wird. Bevorzugt kann an der Aufsetzkante eine Innenwandung der Stanzniet-Innenwölbung und ein Nietschaft-Außenumfang spitzwinklig mit einem Schneidenwinkel von zum Beispiel 45° zusammenlaufen. Die Aufsetzkante kann mit einem Rundungsradius im Bereich von 0,15 mm abgerundet sein.

Im unverformten Niet-Zustand kann die Gesamtlänge des Stanzniets in einem Bereich von 4 mm bis 8 mm, insbesondere zwischen 4,5 mm und 6,0 mm, liegen. Der Nietkopfdurchmesser kann in einem Bereich von 4,5 bis 8,5 mm, insbesondere bei 5,5 mm oder 7,75 mm liegen, während der Nietschaftdurchmesser in einem Bereich von 2,8 mm bis 6,6 mm liegen kann. Ein solcher Nietschaftdurchmesser ist mit bekannten Nietmaschinen verarbeitbar.

Mit dem Stanzniet kann das Materialstärken-Verhältnis zwischen dem ersten, stempelseitigen Bauteil und dem zweiten, matrizenseitigen Bauteil zwischen 1:1 und 1:3 liegen. Die Materialstärke des ersten, stempelseitigen Bauteils kann dabei bevorzugt kleiner oder gleich 1,3 mm sein.

Nachfolgend ist ein Ausführungsbeispiel der Erfindung anhand der beigefügten Figuren beschrieben.

Es zeigen:
- Figur 1: ein Schliffbild eines Stanzniets im unverformten Zustand;
- Figur 2: in grob schematischer Darstellung ein in einem Setzwerkzeug befindlicher Stanzniet vor Durchführung des Setzprozesses; und
- Figur 3: eine Stanznietverbindung.

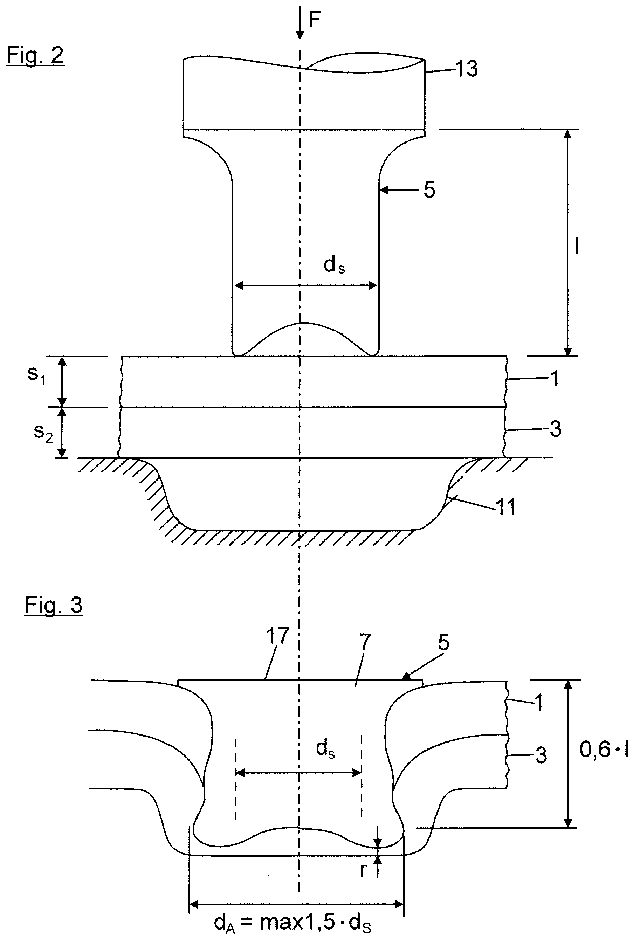

In der Figur 3 ist eine fertiggestellte Stanznietverbindung gezeigt, bei der ein stempelseitiges Aluminiumblechteil 1 und ein matrizenseitiges Aluminiumblechteils 3 mittels eines Stanzniets 5 miteinander verbunden sind. Die beiden Aluminiumblechteile 1 weisen in der Figur 2 oder 3 in etwa gleiche Materialstärken s₁, s₂ auf. Der Stanzniet 5 weist einen Nietkopf 7 und einen Nietschaft 9 auf. In den Figuren ist der Stanzniet 5 als ein Flachkopfniet mit einer ebenflächigen, planparallelen Nietkopf-Oberseite 17 realisiert. Die Nietkopf-Oberseite 17 ist in der Figur 3 flächenbündig zur Oberfläche des Bauteils 1 ausgerichtet.

Zur Vorbereitung des Setzprozesses werden die beiden Bauteile 1, 3 aufeinanderliegend auf eine Matrize 11 des Setzwerkzeugs gelegt und mittels eines nicht gezeigten Niederhalter-Systems mit einer Niederhalterkraft zusammengepresst. Anschließend wird der Stanzniet 5 mittels eines Stempels 13 mit einer Setzkraft F in die beiden Bauteile 1, 3 eingetrieben. Beim Setzprozess durchstößt der Stanzniet 5 das Material des stempelseitigen Bauteils 1 und wird dieser bis in das zweite Bauteil 3 eingetrieben, und zwar unter Aufrechterhaltung einer Restbodendicke r (Figur 3) des stempelseitigen Bauteils 3 sowie unter Aufspreizung des Stanzniets 5 bis auf einen Aufspreizdurchmesser d_{A} im zweiten Bauteil 3, um eine Hinterschneidung zu erzeugen.

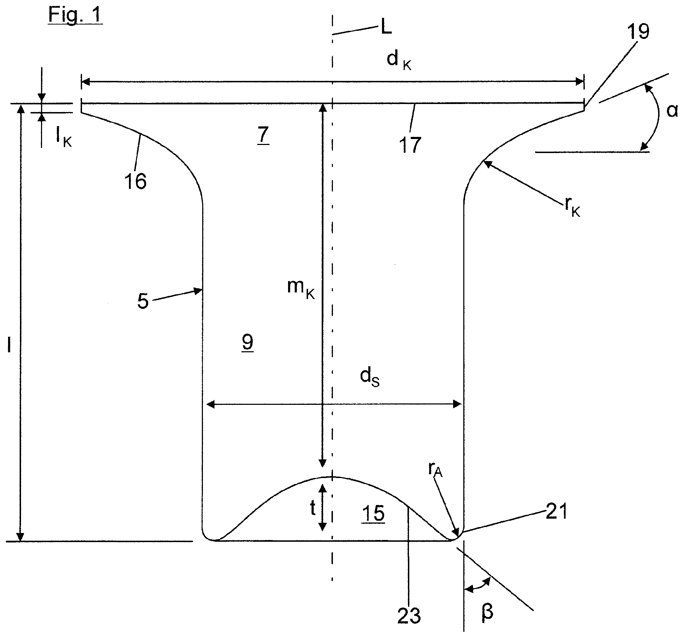

Nachfolgend wird anhand der Figur 1 der Stanzniet 5 in Alleinstellung beschrieben: Demzufolge weist der rotationssymmetrische Stanzniet 5 eine zur Schaftspitze offene, kalottenförmige Innenwölbung 15 auf, die mit einer Wölbungstiefe t in Axialrichtung in den Nietschaft 9 einragt. Die Wölbungstiefe t beträgt in der Figur 1 15% der Stanzniet-Gesamtlänge I. Umgekehrt beträgt die Nietkopf-Materialstärke m_{K}, die sich entlang der Niet-Längsachse L zwischen einer Nietkopf-Oberseite 17 und der Innenwölbung 15 erstreckt, 85% der Stanzniet-Gesamtlänge I. Der Übergang zwischen dem Nietschaft 9 und dem Nietkopf 7 ist in der Figur 1 durch eine gerundet ausgebildete Nietkopf-Unterseite 16 mit gleichbleibendem Kopfradius d_{K} ausgebildet, der beispielhaft bei 1 mm liegt. Die gerundet ausgebildete Nietkopf-Unterseite 16 geht tangential nach radial außen in eine ebenflächige, konusförmige Nietkopf-Unterseite über, die sich bis zu einem Nietkopf-Rand 19 erstreckt. In der Figur 1 ist die ebenflächige, konusförmige Nietkopf-Unterseite mit Bezug auf eine Querebene um einen Konuswinkel α (Figur 1) von etwa 20° schräg nach oben in Richtung Nietkopf-Oberseite 17 angestellt. Der radial außen umlaufende Nietkopf-Rand 19 erstreckt sich mit einer Kopfseitenhöhe I_{K} von etwa 0,3 mm zwischen der Nietkopf-Unterseite 16 und der Nietkopf-Oberseite 17.

An der, dem Nietkopf 7 abgewandten Schaftspitze ist eine ringförmig umlaufende sowie die Innenwölbung 15 begrenzende Aufsetzkante 21 ausgebildet. An der Aufsetzkante 21 laufen eine Innenwandung 23 der Stanzniet-Innenwölbung 15 und ein Nietschaft-Außenumfang spitzwinklig zusammen, und zwar mit einem Kantenwinkel β von etwa 45°. Die Aufsetzkante 21 ist in der Figur 1 mit einem Rundungsradius rₐ von 0,15 mm abgerundet.

In der Figur 1 beträgt die Gesamtlänge l des Stanzniets 5 im unverformten Zustand 5 mm, der Nietkopfdurchmesser d_{K} liegt bei 5,5 mm sowie der Nietschaftdurchmesser ds bei 2,9 mm. Das Grundmaterial des Stanzniets 5 ist ein Kaltstauchstahl. Dessen Festigkeit liegt im Ausgangszustand ohne Kaltverfestigung bei 750 bis 900 MPa.

Die vergleichsweise geringe Festigkeit des Stanzniets 5 ergibt in Kombination mit der oben beschriebenen Stanzniet-Geometrie ein spezielles Stanzniet-Stauchverhalten, bei dem der Stanzniet 5 nach dem Setzprozess auf 60% seiner Ausgangslänge I (Figur 2) zusammengestaucht ist und der Aufspreizdurchmesser d_{A} auf 135% bis 150% des Nietschaftdurchmessers ds vergrößert ist, ohne dass es im Stanzniet 5 zu Materialrissen kommt. Wie aus der Figur 3 weiter hervorgeht, ist nach dem Setzprozess die Stanzniet-Innenwölbung 15 aufgrund von Materialfluss im Wesentlichen vollständig durch das Stanzniet-Material aufgefüllt. Die Schaftspitze der Stanzniet 15 ist daher in der Figur 3 eine im Wesentlichen ebene Stirnfläche.

### BEZUGSZEICHENLISTE:

- 1: stempelseitiges Bauteil
- 3: matrizenseitiges Bauteil
- 5: Stanzniet
- 7: Nietkopf
- 9: Nietschaft
- 11: Matrize
- 13: Stempel
- 15: Innenwölbung
- 16: Nietkopf-Unterseite
- 17: Nietkopf-Oberseite
- 19: Nietkopf-Rand
- 21: Aufsetzkante
- 23: Innenwandung
- ds: Nietschaftdurchmesser
- d_{K}: Nietkopfdurchmesser
- d_{A}: Aufspreizdurchmesser
- r_{K}: Kopfradius
- α: Konuswinkel
- β: Aufsetzkanten-Winkel
- r_{A}: Rundungswinkel der Aufsetzkante
- l: Stanzniet-Gesamtlänge
- l_{K}: Kopfseitenhöhe
- m_{K}: Nietkopf-Materialstärke
- t: Wölbungstiefe der Innenwölbung
- r: Restbodendicke
- L: Stanzniet-Längsachse
- s₁, s₂: Materialstärken
- F: Setzkraft

## Patentansprüche

1. Stanznietverbindung, mit zumindest zwei Bauteilen (1, 3) aus umformfähigen, metallischen Werkstoffen mit einer Festigkeit bis 300 MPa, die in einem Nietvorgang miteinander verbunden sind, bei dem ein Stanzniet (5) mit einer Setzkraft (F) das erste, stempelseitige Bauteil (1) durchstößt und in das zweite, matrizenseitige Bauteil (3) eingetrieben ist, und zwar unter Aufrechterhaltung einer Restbodendicke (r) im zweiten Bauteil (3) und unter Aufspreizung des Stanzniets (5) bis auf einen Aufspreizdurchmesser (d_{A}) im zweiten Bauteil (3), wobei der Stanzniet (5) nach dem Nietvorgang auf bis zu 60% seiner Ausgangslänge (I) zusammengestaucht ist und der Aufspreizdurchmesser (d_{A}) auf bis zu 140% bis 150% des Nietschaftdurchmessers (ds) vergrößert ist, und zwar ohne Beschädigung des Stanzniets (5) durch Stanzniet-Materialrisse, **dadurch gekennzeichnet, dass** eine Innenwölbung (15) im unverformten Zustand ausgehend von der Schaftspitze mit einer Wölbungstiefe (t) in Axialrichtung in den Nietschaft (9) einragt, und dass die Wölbungstiefe (t) zwischen 10% und 25% der Stanzniet-Gesamtlänge (I) beträgt.

2. Stanznietverbindung nach Anspruch 1, **dadurch gekennzeichnet, dass** der noch unverformte Stanzniet (5) einen zylindrischen Nietschaft (9) mit der zur Schaftspitze offenen, kalottenförmigen Innenwölbung (15) und einen mit Bezug auf den Nietschaftdurchmesser (ds) durchmessergrößeren Nietkopf (7) aufweist, und dass nach dem Nietvorgang die Stanzniet-Innenwölbung (15) aufgrund von Materialfluss während des Nietvorgangs vollständig durch Stanzniet-Material aufgefüllt ist, und dass die Schaftspitze nach dem Nietvorgang eine ebene Stirnfläche aufweist, oder eine gerundete Stirnfläche mit einem auf die Nietabmessungen bezogen großen Radius aufweist.

3. Stanznietverbindung nach Anspruch 1 oder nach Anspruch 2, **dadurch gekennzeichnet, dass** die Nietkopf-Materialstärke (m_{K}), die sich entlang der Niet-Längsachse (L) zwischen einer Nietkopf-Oberseite (17) und der Innenwölbung (15) erstreckt, zwischen 75% und 90% der Stanzniet-Gesamtlänge (I) beträgt.

4. Stanznietverbindung nach Anspruch 2 oder 3, **dadurch gekennzeichnet, dass** der Übergang zwischen dem Nietschaft (9) und dem Nietkopf (7) durch eine gerundet ausgebildete Nietkopf-Unterseite (16) mit gleichbleibendem Kopfradius (r_{K}) ausgebildet ist, und dass die gerundet ausgebildete Nietkopf-Unterseite (16) tangential nach radial außen in eine ebenflächige, konusförmige Nietkopf-Unterseite übergeht, die sich bis zu einem Nietkopf-Rand (19) erstreckt, und/oder dass die ebenflächige, konusförmige Nietkopf-Unterseite mit Bezug auf eine Horizontalebene um einen Konuswinkel (α) schräg nach oben in Richtung Nietkopf-Oberseite (17) gestellt ist, und dass der Kopfradius (r_{K}) zwischen 0,8 mm und 2,0 mm liegt, und/oder der Konuswinkel (α) in einer Größenordnung von 20° liegt.

5. Stanznietverbindung nach einem der vorhergehenden Ansprüche, **dadurch gekennzeichnet, dass** der Stanzniet (5) eine Flachkopfniet mit einer ebenflächigen Nietkopf-Oberseite (17) ist, und dass in der Stanznietverbindung die Nietkopf-Oberseite (17) flächenbündig, das heißt ohne Kopf-Überstand, mit der Oberfläche des ersten, stempelseitigen Bauteils (1) ausgerichtet ist, und zwar nicht erhaben gegenüber der ganzheitlichen Bauteil-Oberfläche, und dass ein umlaufender Nietkopf-Rand (19) sich radial außen zwischen der Nietkopf-Unterseite (16) und der Nietkopf-Oberseite (17) über eine Kopfseitenhöhe (l_{K}) erstreckt, und dass die Kopfseitenhöhe (l_{K}) 0,3 mm beträgt.

6. Stanznietverbindung nach einem der vorhergehenden Ansprüche, **dadurch gekennzeichnet, dass** an der, dem Nietkopf (7) abgewandten Schaftspitze eine ringförmig umlaufende, die Innenwölbung (15) begrenzende Aufsetzkante (21) ausgebildet ist, und dass die Aufsetzkante (21) beim Nietvorgang als Schneide wirkt, mit der einerseits ein frühzeitiges Stauchen der Stanzniet (5) unterbindbar ist, und andererseits ein Ausspreizen der Stanzniet (5) um ein vordefiniertes Spreizmaß radial nach außen steuerbar ist, und dass an der Aufsetzkante (21) eine Wandung (23) der Stanzniet-Innenwölbung (15) und ein Nietschaft-Außenumfang spitzwinklig, mit einem Kantenwinkel (β) von 45° zusammenlaufen, und/oder dass die Aufsetzkante (21) mit einem Rundungsradius (rₐ) im Bereich von 0,15 mm abgerundet ist.

7. Stanznietverbindung nach einem der vorhergehenden Ansprüche, **dadurch gekennzeichnet, dass** im unverformten Zustand die Stanzniet-Gesamtlänge (I) 4 bis 8 mm beträgt, der Nietkopfdurchmesser (d_{K}) 4,5 bis 8,5 mm beträgt, und/oder der Nietschaftdurchmesser (ds) 2,8 mm bis 6,6 mm beträgt.

8. Stanznietverbindung nach einem der vorhergehenden Ansprüche, **dadurch gekennzeichnet, dass** das Grundmaterial des Stanzniets (5) ein Drahtwerkstoff aus Kaltfließpressstahl oder Kaltstauchstahl ist, und/oder dass der Stanzniet (5) eine im Vergleich zu konventionellen Stanznieten geringe Festigkeit, jedoch erheblich größere Duktilität aufweist, und dass die Festigkeit des Stanzniets (5) im Ausgangszustand ohne Kaltverfestigung zwischen 600 MPa und 1000 MPa liegt.

9. Stanznietverbindung nach einem der vorhergehenden Ansprüche, **dadurch gekennzeichnet, dass** das Materialstärken-Verhältnis zwischen dem ersten, stempelseitigen Bauteil (1) und dem zweiten, matrizenseitigen Bauteil (3) zwischen 1:1 und 1:3 liegt, und dass die Materialstärke des ersten, stempelseitigen Bauteils (1) kleiner oder gleich 1,3 mm ist.

## Claims

1. Self-piercing rivet joint, with at least two components (1, 3) made of formable metallic materials with a strength up to 300 MPa, which are connected to one another by a riveting procedure, in which a self-piercing rivet (5) pierces the first, stamp-side component (1) with a setting force (F) and is driven into the second, die-side component (3), specifically while maintaining a residual base thickness (r) in the second component (3) and while spreading out the self-piercing rivet (5) to a spreading diameter (d_{A}) in the second component (3), wherein the self-piercing rivet (5) is compressed after the riveting procedure down to 60% of its starting length (l) and the spreading diameter (d_{A}) is enlarged up to 140% to 150% of the rivet shaft diameter (dₛ), specifically without damaging the self-piercing rivet (5) by self-piercing rivet material cracks, **characterized in that** an inner curvature (15) in the undeformed state projects starting from the shaft tip with a curvature depth (t) in the axial direction into the rivet shaft (9), and **in that** the curvature depth (t) is between 10% and 25% of the self-piercing rivet total length (l).

2. Self-piercing rivet joint according to claim 1, **characterized in that** the still undeformed self-piercing rivet (5) has a cylindrical rivet shaft (9) with an inner curvature (15), which is open toward the shaft tip and is spherical-cap-shaped and a rivet head (7) larger in diameter in relation to the rivet shaft diameter (d_{S}), and **in that** after the riveting procedure the self-piercing rivet inner curvature (15) is completely filled up by self-piercing rivet material due to material flow during the riveting procedure, and **in that** the shaft tip has an planar end face after the riveting procedure, or a rounded end face with a large radius in relation to the rivet dimensions.

3. Self-piercing rivet joint according to claim 1 or according to claim 2, **characterized in that** the rivet head material thickness (m_{K}), which extends along the rivet longitudinal axis (L) between a rivet head upper side (17) and the inner curvature (15), is between 75% and 90% of the self-piercing rivet total length (1).

4. Self-piercing rivet joint according to claim 2 or 3, **characterized in that** the transition between the rivet shaft (9) and the rivet head (7) is formed by a rounded rivet head lower side (16) with uniform head radius (r_{K}), and **in that** the rounded rivet head lower side (16) merges tangentially radially outwards into a planar, conical rivet head lower side, which extends up to a rivet head boundary (19), and/or **in that** the planar, conical rivet head lower side is set diagonally upward in the direction of the rivet head upper side (17) by a cone angle (α) in relation to a horizontal plane, and **in that** the head radius (r_{K}) is between 0.8 mm and 2.0 mm, and/or the cone angle (α) is in an order of magnitude of 20°.

5. Self-piercing rivet joint according to any one of the preceding claims, **characterized in that** the self-piercing rivet (5) is a flat head rivet with a planar rivet head upper side (17), and **in that**, in the self-piercing rivet joint, the rivet head upper side (17) is aligned surface flush, that is to say without head projection, with the surface of the first, stamp-side component (1), and in particular is not raised in relation to the integral component surface, and **in that** a circumferential rivet head boundary (19) extends radially outwards between the rivet head lower side (16) and the rivet head upper side (17) over a head lateral height (l_{K}), and **in that** the head lateral height (l_{K}) is in particular 0.3 mm.

6. Self-piercing rivet joint according to any one of the preceding claims, **characterized in that** on the shaft tip facing away from the rivet head (7), a ring-shaped circumferential placement edge (21) delimiting the inner curvature (15) is formed, and **in that** the placement edge (21) acts as a cutting edge during the riveting procedure, with which, on the one hand, early compression of the self-piercing rivet (5) can be suppressed, and, on the other hand, spreading out of the self-piercing rivet (5) by a predefined spreading amount radially outwards can be controlled, and **in that** a wall (23) of the self-piercing rivet inner curvature (15) and a rivet shaft outer circumference run together at an acute angle, in particular at an edge angle (β) of 45°, at the placement edge (21), and/or **in that** the placement edge (21) is rounded with a rounding radius (rₐ) in the region of 0.15 mm.

7. Self-piercing rivet joint according to any one of the preceding claims, **characterized in that** in the undeformed state, the self-piercing rivet total length (l) is 4 to 8 mm, the rivet head diameter (d_{K}) is 4.5 to 8.5 mm, and/or the rivet shaft diameter (d_{S}) is 2.8 mm to 6.6 mm.

8. Self-piercing rivet joint according to any one of the preceding claims, **characterized in that** the base material of the self-piercing rivet (5) is a wire material made of cold extrusion steel or cold heading steel, and/or **in that** the self-piercing rivet (5) has a low strength in comparison to conventional self-piercing rivets, but significantly greater ductility, and **in that** the strength of the self-piercing rivet (5) in the starting state without strain hardening is between 600 MPa and 1000 MPa.

9. Self-piercing rivet joint according to any one of the preceding claims, **characterized in that** the material thickness ratio between the first, stamp-side component (1) and the second, die-side component (3) is between 1:1 and 1:3, and **in that** the material thickness of the first, stamp-side component (1) is less than or equal to 1.3 mm.

## Revendications

1. Liaison par rivet auto-poinçonneur avec au moins deux composants (1, 3) en matériaux métalliques déformables avec une résistance jusqu'à 300 MPa qui sont reliés l'un à l'autre dans un processus de rivetage pour lequel un rivet auto-poinçonneur (5) traverse le premier composant (1) côté poinçon avec une force de pose et est enfoncé dans le second composant (3) côté matrice, et ce en conservant une épaisseur de fond résiduelle (r) dans le second composant (3) et en écartant le rivet auto-poinçonneur (5) jusqu'à un diamètre d'écartement (d_{A}) dans le second composant (3), dans laquelle le rivet auto-poinçonneur (5) est tassé après le processus de rivetage jusqu'à 60 % de sa longueur de départ (l) et le diamètre d'écartement (d_{A}) est agrandi jusqu'à 140 % à 150 % du diamètre de la tige de rivet et ce sans endommager le rivet auto-poinçonneur (5) par des fissures de matériau de rivet auto-poinçonneur, **caractérisée en ce qu'**une courbure interne (15) pénètre dans l'état non déformé à partir de la pointe de tige avec une profondeur de courbure (t) dans le sens axial dans la tige de rivet (9), et **en ce que** la profondeur de courbure (t) est comprise entre 10 % et 25 % de la longueur entière de rivet auto-poinçonneur (l).

2. Liaison par rivet auto-poinçonneur selon la revendication 1, **caractérisée en ce que** le rivet auto-poinçonneur (5) qui n'est pas encore déformé présente une tige de rivet (9) cylindrique avec la courbure interne (15) en forme de calotte, ouverte vers la pointe de tige et une tête de rivet (7) plus grande en diamètre par rapport au diamètre de tige de rivet et **en ce qu'**après le processus de rivetage, la courbure interne du rivet auto-poinçonneur (15) est entièrement remplie par du matériau du rivet auto-poinçonneur pendant le processus de rivetage en raison du flux de matériau, et **en ce que** la pointe de tige présente après le processus de rivetage une surface avant plane, ou une surface avant arrondie avec un grand rayon par rapport aux dimensions du rivet.

3. Liaison par rivet auto-poinçonneur selon la revendication 1 ou selon la revendication 2, **caractérisée en ce que** l'épaisseur de matériau de la tête de rivet (m_{K}) qui s'étend le long de l'axe longitudinal du rivet (L) entre un côté supérieur de la tête de rivet (17) et la courbure interne (15), est comprise entre 75 % et 90 % de la longueur entière du rivet auto-poinçonneur (l).

4. Liaison par rivet auto-poinçonneur selon la revendication 2 ou 3, **caractérisée en ce que** la transition entre la tige de rivet (9) et la tête de rivet (7) est formée par un côté inférieur de la tête de rivet (16) formé de manière arrondie avec un rayon de tête constant (r_{K}), et **en ce que** le côté inférieur de la tête de rivet (16) formé de manière arrondie passe tangentiellement radialement vers l'extérieur en un côté inférieur de la tête de rivet conique à surface plane qui s'étend jusqu'à un bord de la tête de rivet (19) et/ou **en ce que** le côté inférieur de la tête de rivet conique à surface plane est placé, par rapport à un plan horizontal en biais vers le haut en direction du côté supérieur de la tête de rivet (17) selon un angle de cône (α), et **en ce que** le rayon de tête (r_{K}) est compris entre 0,8 mm et 2,0 mm, et/ou **en ce que** l'angle de cône (α) se trouve dans un ordre de grandeur de 20°.

5. Liaison par rivet auto-poinçonneur selon l'une quelconque des revendications précédentes, **caractérisé en ce que** le rivet auto-poinçonneur (5) est un rivet à tête plate avec un côté supérieur de la tête de rivet (17) à surface plane, et **en ce que** dans la liaison par rivet auto-poinçonneur, le côté supérieur de la tête de rivet (17) est orienté à fleur, c'est-à-dire sans surplomb de la tête, avec la surface du premier composant (1) côté poinçon, et n'est pas surélevé par rapport à la surface globale du composant, et **en ce qu'**un bord de la tête de rivet (19) périphérique s'étend radialement à l'extérieur entre le côté inférieur de la tête de rivet (16) et le côté supérieur de la tête de rivet (17) au-dessus d'une hauteur latérale de la tête (l_{K}), et **en ce que** la hauteur latérale de la tête (l_{K}) s'élève à 0,3 mm.

6. Liaison par rivet auto-poinçonneur selon l'une quelconque des revendications précédentes, **caractérisée en ce qu'**une arête de pose (21) limitant la courbure interne (15), périphérique et en forme d'anneau est formée au niveau de la pointe de tige éloignée de la tête de rivet (7), et **en ce que** l'arête de pose (21) fait office de tranchant lors du processus de rivetage, tranchant avec lequel d'une part un aplatissement précoce du rivet auto-poinçonneur (5) peut être interrompu, et d'autre part un écartement du rivet auto-poinçonneur (5) selon une mesure d'écartement prédéfinie peut être commandé radialement vers l'extérieur, et **en ce qu'**une paroi (23) de la courbure interne du rivet auto-poinçonneur (15) et une périphérie extérieure de la tige de rivet convergent selon un angle aigu avec un angle d'arête (β) de 45° au niveau de l'arête de pose (21), et/ou **en ce que** l'arête de pose (21) est arrondie avec un rayon de courbure (rₐ) dans la plage de 0,15 mm.

7. Liaison par rivet auto-poinçonneur selon l'une quelconque des revendications précédentes, **caractérisée en ce que** dans l'état non déformé, la longueur totale du rivet auto-poinçonneur (l) est comprise entre 4 et 8 mm, le diamètre de la tête de rivet (d_{K}) est compris entre 4,5 et 8,5 mm et/ou le diamètre de la tige de rivet (d_{S}) est compris entre 2,8 mm et 6,6 mm.

8. Liaison par rivet auto-poinçonneur selon l'une quelconque des revendications précédentes, **caractérisée en ce que** le matériau de base du rivet auto-poinçonneur (5) est un matériau de fil fabriqué en acier pour extrusion à froid ou en acier pour frappe à froid, et/ou **en ce que** le rivet auto-poinçonneur (5) présente une résistance faible par rapport aux rivets auto-poinçonneurs traditionnels, mais une ductilité considérablement plus grande, et **en ce que** la résistance du rivet auto-poinçonneur (5) dans l'état de départ sans écrouissage est comprise entre 600 MPA et 1000 MPA.

9. Liaison par rivet auto-poinçonneur selon l'une quelconque des revendications précédentes, **caractérisée en ce que** le rapport de densité de matériau entre le premier composant (1) côté poinçon et le second composant (3) côté matrice est compris entre 1:1 et 1:3, et **en ce que** l'intensité de matériau du premier composant (1) côté poinçon est inférieure ou égale à 1,3 mm.
